Europäisches Patentamt

European Patent Office

Office européen des brevets

(19)

(11) Veröffentlichungsnummer: **0 230 504**
**A2**

(12) **EUROPÄISCHE PATENTANMELDUNG**

(21) Anmeldenummer: 86106743.7

(22) Anmeldetag: 15.07.83

(51) Int. Cl.³: **A 23 G 1/00**
**A 23 L 2/38**

(30) Priorität: 17.07.82 DE 3226765
07.10.82 DE 3237077
04.02.83 DE 3303709

(43) Veröffentlichungstag der Anmeldung:
05.08.87 Patentblatt 87/32

(84) Benannte Vertragsstaaten:
AT BE CH DE FR GB IT LI LU NL SE

(60) Veröffentlichungsnummer der früheren
Anmeldung nach Art. 76 EPÜ: **0 099 557**

(71) Anmelder: Krüger GmbH & Co. KG
Meisenweg 2 Postfach 20 05 29
D-5060 Bergisch Gladbach 2(DE)

(72) Erfinder: Schott, Gerhard
Am Werfel 14
D-4020 Mettmann(DE)

(74) Vertreter: Werner, Hans-Karsten, Dr. et al,
Deichmannhaus am Hauptbahnhof
D-5000 Köln 1(DE)

(54) Instant-Getränke sowie Verfahren zu ihrer Herstellung.

(57) Instant-Getränke in Pulver-, Granulat- oder Pastenform, welche Kakaopulver enthalten sowie gegebenenfalls Geschmacks- und/oder Aromastoffe und einen Träger, werden hergestellt, indem als Träger ein in Flüssigkeit dispergierbares Protein verwendet wird. Der Gahalt an Kakaopulver kann merklich erhöht werden. Die neuen Produkte sind nicht kariogen.

EP 0 230 504 A2

Instant-Getränke wurden bisher in erheblichem Umfang aus getrockneten Pflanzenextrakten, gegebenenfalls Geschmacks- und/oder Aromastoffen und einem rasch wasserlöslichen Träger hergestellt. Als Träger wurden vorwiegend Saccharose und Dextrose eingesetzt. Die Instant-Tees wurden hergestellt, indem man die Komponenten mit Ausnahme des Trägers entweder einzeln oder gemeinsam sprühgetrocknet mit dem Träger vermischt hat und gewünschtenfalls anschließend granuliert hat. Besonders empfindliche Pflanzenextrakte sind zum Teil auch durch Gefriertrocknung gewonnen worden. Wegen der relativ hohen Kosten einer Gefriertrocknung wurde statt dessen auch gelegentlich ein sprühgetrocknetes Präparat eingesetzt, dem anschließend wieder ein Geschmacks- oder Aromastoff zugesetzt werden konnte. Instant-Getränke auf Basis von Saccharose und/oder Dextrose enthielten im allgemeinen 1 bis 6, vorzugsweise 2% Pflanzenextrakt. Die überwiegende Menge der Instant-Getränke bestand aus dem Träger, der dementsprechend 94 bis 99 Gew.-% ausmachte.

Instant-Getränke auf Basis von Saccharose und/oder Dextrose weisen den Nachteil auf, daß bei übersteigerter Verwendung insbesondere bei Säuglingen und Kleinkindern, durch den eingesetzten Zucker gehäuft Karies beobachtet wird. In einigen Produkten ist man daher dazu übergegangen, als Trägerstoff Maltodextrin einzusetzen. Untersuchungen haben jedoch ergeben, daß auch Maltodextrin ähnliche kariogene Eigenschaften wie Saccharose und Dextrose hat.

Die Erfindung hat sich zunächst die Aufgabe gestellt, Instant-Getränke zu entwickeln, welche nicht den Nachteil der Kariogenität aufweisen und daher unbedenklich auch bei Säuglingen und Kleinkindern eingesetzt werden können.

Dabei sollen jedoch die Haltbarkeit, Dosierbarkeit und Handhabbarkeit herkömmlicher Instant-Getränke erhalten bleiben.

Der Zusatz "Instant" besagt jeweils, daß die Getränke in Pulver-, Granulat- oder Pastenform vorliegen und beim Zusammenbringen mit einer Flüssigkeit rasch dispergiert werden, so daß man rasch und einfach die trinkfertige Zubereitung erhält. Instant-Getränke umfassen somit nicht die trinkfertigen Zubereitungen mit einer Flüssigkeit, sondern nur die pulver,- granulat- oder pastenförmige Vorstufe.

Die erfindungsgemäßen Instant-Getränke umfassen weiterhin nicht die reinen Pflanzenextrakte, Pflanzenpulver, Fruchtextrakte oder Fruchtpulver ohne einen Träger, da diese im allgemeinen nicht oder nur vorübergehend instantisiert werden können, meist sehr hygroskopisch sind und wegen ihrer hohen Konzentration und häufig hohen Schüttdichte sehr schwer dosierbar und handhabbar sind. Pflanzenextrakte, die ohne Träger instantisiert worden sind, sind so hygroskopisch, daß sie bereits nach kurzer Zeit unter Zutritt von Luftfeuchtigkeit zu harten Produkten verklumpen, die nicht mehr gut dosierbar sind, höhere Schüttdichte aufweisen und nur noch langsam in Wasser löslich sind. Ein weiterer Nachteil von instantisierten Pflanzenextrakten ohne Träger besteht darin, daß sie durch das Instantisieren in erheblichem Maße Aromastoffe und vielfach auch Anteile ihrer Wirkstoffe verlieren. Ein nachträglicher Zusatz von flüssigen Geschmacks- und/oder Aromastoffen ist beim Instantisieren ohne Träger ebenfalls praktisch nicht möglich.

Es wurde jetzt gefunden, daß man Instant-Getränke in Pulver-, Granulat- oder auch Pastenform, enthaltend Kakaopulver sowie ggf. Geschmacks- und/oder Aromastoffe, erhält, wenn man ein in Flüssigkeit dispergierbares Protein als Träger verwendet. Die erfindungsgemäßen Instant-Getränke sind somit dadurch gekennzeichnet, daß der Träger ein in Flüssigkeit dispergierbares Protein ist.

Gegenstand der vorliegenden Anmeldung sind weiterhin Instant-Getränke und Verfahren zu ihrer Herstellung.

Als Flüssigkeit zum Dispergieren des Proteins kommt vorzugsweise Wasser in Frage. Prinzipiell können aber auch Milch, Säfte und Ethanolwassergemische verwendet werden.

Erfindungsgemäß besonders geeignet sind in Wasser dispergierbare Proteine. Im Gegensatz zu Instant-Getränken auf Basis von Saccharose und/oder Dextrose, die im allgemeinen 1 bis 6%, vorzugsweise 2% Pflanzenextrakt enthalten, enthalten die erfindungsgemäßen Instant-Getränke vorzugsweise 50 bis 90 Gew.-% Protein als Träger.

Überraschenderweise ist es möglich, bei der erfindungsgemäßen Verwendung von Protein als Träger eine größere Menge Kakaopulver zu instantisieren und dabei trotzdem noch Produkte zu erhalten, die bezüglich Haltbarkeit, Dosierbarkeit und Handhabbarkeit mit herkömmlichen Instant-Getränken auf Basis von Saccharose und/oder Dextrose vergleichbar oder sogar besser sind. Dieser Effekt beruht zum Teil darauf, daß die Schüttgewichte der erfindungsgemäßen Produkte wesentlich niedriger liegen als bei Verwendung von Saccharose und/oder Dextrose als Träger.

Herkömmliche Instant-Getränke weisen im allgemeinen ein Schüttgewicht von 0,4 bis 0,8 g pro ml auf und die erfindungsgemäßen Produkte weisen Schüttgewichte von 0,1 - 0,5, vorzugsweise etwa 0,2 g/ml auf. Die erfindungsgemäßen Produkte sind weiterhin wesentlich weniger hygroskopisch als Instant-Getränke ohne Träger. Sie behalten daher ihr niedriges Schüttgewicht auch längere Zeit nach dem Zutritt von Luftfeuchtigkeit. Sie bleiben daher auch bei längerer Lagerung leicht dosierbar, leicht handhabbar und leicht dispergierbar bzw. löslich.

Da die fertige Zubereitung aus dem Instant-Getränk trüb sein darf, wird als Protein ein leicht in der Flüssigkeit dispergierbares Protein verwendet. Weiterhin kommt beispielsweise ein weitgehend von Fett und Kohlenhydraten befreites Milchprotein in Frage. Milchpulver enthält zwar dispergierbares Protein, wegen seines hohen Fett- und Kohlenhydratgehaltes kommt es jedoch als Träger für die erfindungsgemäßen Instant-Getränke nicht in Frage.

Die erfindungsgemäßen Instant-Getränke können gegebenenfalls Geschmacks- und/oder Aromastoffe enthalten. Zu den Geschmacksstoffen zählen unter anderem auch die kohlenhydratfreien Süßstoffe wie Saccharin, Cyclamat, Aspartam sowie Zuckeraustauschstoffe wie Xylit, Sorbit und Mannit.

Als Aromastoffe kommen prinzipiell alle natürlichen und künstlichen Aromastoffe in Frage, die auch den instantisierten Getränken zugesetzt werden können. Da die Aromastoffe wegen ihrer Flüchtigkeit während des Instantisierens dazu neigen, ganz oder teilweise verlorenzugehen, werden sie oftmals erst danach zugegeben.

Das erfindungsgemäße Verfahren zur Herstellung von Instant-Getränken in Pulver- oder Granulatform auf einem
Träger ist somit ein Verfahren zur Herstellung von Instant-Getränken in Pulver- oder Granulatform, enthaltend Kakaopulver sowie gegebenenfalls Geschmacks- und/
oder Aromastoffe auf einem Träger, dadurch gekennzeichnet, daß man entweder

a) Kakaopulver sowie gegebenenfalls die Geschmacks-
   und/oder Aromastoffe und ein dispergierbares Protein
   trocken vermischt, oder

b) Kakaopulver zusammen mit einem Protein dispergiert,
   vermischt und zusammen trocknet und die so erhaltenen Produkte gegebenenfalls granuliert, preßt und/
   oder agglomeriert sowie gegebenenfalls mit Geschmacks- und/oder Aromastoffen versetzt.

Prinzipiell ist es in einigen Fällen möglich, auf die
vollständige Trocknung zu verzichten und so rasch dispergierbare Pasten zu erhalten. Derartige Pasten lassen
sich vorzugsweise in Tuben abfüllen. Derartige Pasten
sind ebenfalls gut haltbar, leicht dosierbar und leicht
handhabbar und können somit als Instant-Getränke angesprochen werden.

Den erfindungsgemäßen Produkten ist gemeinsam, daß sie
praktisch ohne Zusatz von kariogenen Kohlenhydraten
herstellbar sind und im Vergleich zu herkömmlichen Instant-Getränken sehr geringen Nährwert enthalten. Im
Gegensatz zu instantisierten Nährmitteln, die ein möglichst ausgewogenes Verhältnis zwischen Kohlenhydraten,
Fett, Eiweiß und Mineralstoffen enthalten sollen, weisen die erfindungsgemäßen Produkte nur einen sehr geringen Nährwert auf.

Es kann somit mit ihrer Hilfe vermieden werden, dem Körper unbeabsichtigt und unkontrolliert zusätzliche Nahrungsmittel zuzuführen. Insbesondere kann beim Einsatz der Säuglings- und Kinderernährung vermieden werden, daß der Ausbildung von Karies Vorschub geleistet wird. Ein bevorzugtes Einsatzgebiet der erfindungsgemäßen Produkte ist somit auch die Säuglings- und Kinderernährung. Prinzipiell können aber die erfindungsgemäßen Instant-Getränke zur Herstellung von trinkbaren Zubereitungen aller Art verwendet werden. Sofern es sich um in wässrigem Alkohol dispergierbare Produkte handelt, können sie auch zur schnellen und einfachen Zubereitung alkoholischer Mixgetränke verwendet werden.

Als Kakaopulver kommen erfindungsgemäß alle handelsüblichen Kakaopulver in Frage, denen gewünschtenfalls nachträglich Kakaoaroma zugesetzt wird. Besonders aromastabile Produkte erhält man dann, wenn die Aromastoffe in mikroverkapselter Form in das Endprodukt eingebracht werden. Neben den üblichen Granulier-, Preß- und Agglomerierverfahren kann das Endprodukt auch nach dem sogenannten Pillsbury-Verfahren zu einem flockigen Präparat verarbeitet werden. In allen Fällen erhält man stabile, gut handhabbare und gut dosierbare Produkte mit niedriger Schüttdichte, die allen Anforderungen der Praxis gerecht werden.

- 8 -

P a t e n t a n s p r ü c h e

1. Instant-Getränke enthaltend Kakaopulver sowie gegebenenfalls Geschmacks- und/oder Aromastoffe und einen Träger, dadurch gekennzeichnet, daß sie keinen Zusatz von kariogenen Kohlenhydraten enthalten und der Träger ein in Wasser dispergierbares Protein ist.

2. Instant-Getränke gemäß Anspruch 1, dadurch gekennzeichnet, daß sie 50 bis 90 Gew.-% Träger enthalten.

3. Verfahren zur Herstellung von Instant-Getränken enthaltend Kakaopulver sowie gegebenenfalls Geschmacks- und/oder Aromastoffe auf einem Träger, dadurch gekennzeichnet, daß man entweder

   a) Kakaopulver sowie gegebenenfalls die Geschmacks- und/oder Aromastoffe und in Wasser dispergierbares Protein ohne Zusatz eines kariogenen Kohlenhydrats trocken vermischt oder

   b) Kakaopulver zusammen mit dem Protein dispergiert, vermischt und zusammen trocknet und die so erhaltenen Produkte gegebenenfalls granuliert, preßt, und/oder agglomeriert sowie ggf. mit Geschmacks- und/oder Aromastoffen versetzt.

4. Verfahren gemäß Anspruch 3, dadurch gekennzeichnet, daß die Produkte 50 bis 90 Gew.-% Träger enthalten.

5. Verwendung von in Wasser dispergierbarem Protein zur Herstellung von Instant-Getränken enthaltend Kakaopulver.